# EUROPEAN PATENT APPLICATION

(11) **EP 1 505 833 A2**
(43) Date of publication of application: **09.02.2005**
(21) Application number: 04253578.1
(22) Date of filing: 15.06.2004
(51) Int. Cl.: H04N 7/10

(54) **A wideband catv tap device**

(30) Priority: 06.08.2003 IL 15728503
(71) Applicant: Xtend Networks Ltd., 68012 Tel Aviv (IL)
(72) Inventor: Weinsten, Hillel, 34363 Haifa (IL); Orbach, Zeev, 78484 Ashkelon (IL); Strull, Yishayahu, Tel Aviv (IL)
(74) Representative: Cummings, Sean Patrick

(57) **Abstract**

A hybrid fiber cable network tap device for the receiving and distribution of a wideband signal of about 5 MHz to about 3000 MHz through a line output port and tap output ports, the hybrid fiber cable network tap device comprising diplexers for dividing and combing the low frequency and high frequency signals, splitters or directional couplers for dividing the signal in equal and unequal signal level, an AC power signal bypass and tap output ports for delivering the combined wideband signal to the drop cable. The tap device is also used in the upstream direction of the wideband signal.

## Description

### RELATED APPLICATIONS

The present application is generally related to co-pending PCT application No. PCT/IL00/00655 entitled SYSTEM AND METHOD FOR EXPANDING THE OPERATIONAL BANDWIDTH OF A COMMUNICATION SYSTEM, filed 16 November 2000 and is a continuation-in-part of co-pending PCT application No. PCT/IL02/00342 entitled A WIDEBAND CATV SIGNAL SPLITTER DEVICE, filed 7 May 2002, which are incorporated herein by reference.

### BACKGROUND OF THE INVENTION

### FIELD OF THE INVENTION

The present invention relates generally to hybrid fiber cable network systems and more specifically, to a tap device for the distribution of hybrid fiber cable network signals to the drop cable.

### DISCUSSION OF THE RELATED ART

Hybrid fiber cable network distribution systems (HFC) such as cable television networks (CATV) generally comprise five major parts: 1) the headend; 2) the trunk cable; 3) the feeder cable; 4) the drop cable to the home and 5) the subscriber's equipment. The distribution cable runs past homes of subscribers. Taps are devices located at various points along the distribution cable. A tap connects the distribution cable to the drop cable. Subscribers are typically connected to the drop cable, which is about 25-150 feet long. Known tap devices receive the RF signal from the distribution cable and pass the signal forward to subscribers. The known tap typically splits the signal to two or more subscribers through the use of a splitter device. The tap that divides the signal among the outgoing CATV network subscribers must provide several important performance characteristics. The most important characteristic concerns transmission and distribution of a signal having a bandwidth spanning a wide range of frequencies. Currently, a standard CATV signal has a typical bandwidth ranging from about 5 MHz to about 860 MHz. At frequencies above 860 MHz conventional tap devices do not perform. In addition, successful protocols for broadband data transfer over hybrid fiber coax (HFC) networks such as DOCSIS cannot be used as an alternative to existing data and telephony services because the currently available HFC networks do not provide sufficient spectrum especially in the upstream direction where out of 5-42 MHz less than 20 MHz is usable, thus providing only 60 Mbps of upstream transmission speed. There is therefore a need for tap devices capable of providing to subscribers CATV system signal at frequencies above 860 MHz and up to 3 GHz or above.

### SUMMARY OF THE PRESENT INVENTION

One aspect of the present invention regards a hybrid fiber cable network tap device for the receiving and distribution of a wideband signal of about 5 MHz to about 3000 MHz through at least one line output port and at least two tap output ports. The hybrid fiber cable network tap device comprises an input port for the reception of the wideband signal, a first diplexer device for separating the wideband signal into a low frequency signal of about 5 MHz to about 860 MHz, an AC power signal, and a high frequency signal of about 1000 MHz to about 3000 MHz, an AC power bypass comprising an RF choke for separating the AC power signal from the low frequency signal, a second diplexer device for re-combining the low frequency signal, and the high frequency signal and the AC power signal and to feed the re-combined signal to the at least one line output port, a third diplexer device for re-combining the high frequency signal, and the low frequency signal and for feeding the re-combined signal, a first splitter device for receiving the low frequency signal and for dividing the low frequency signal, and a second splitter device for receiving the high frequency signal and for dividing the high frequency signal.

A second aspect of the present invention regards a hybrid fiber cable network tap device for the receiving and distribution of a wideband signal of about 5 MHz to about 3000 MHz through at least one line output port an at least two tap output ports. The hybrid fiber cable network tap device comprises an input port for the reception of the wideband signal, a first diplexer device for separating the wideband signal into a low frequency signal of about 5 MHz to about 860 MHz, an AC power signal, and a high frequency signal of about 1000 MHz to about 3000 MHz, an AC power bypass comprising an RF choke for separating the AC power signal from the low frequency signal, a second diplexer device for re-combining the low frequency signal, and the high frequency signal and the AC power signal and to feed the re-combined signal to the at least one line output port, a third diplexer device for re-combining the high frequency signal, and the low frequency signal and for feeding the re-combined signal, a first directional coupler device for unequal division of the low frequency signal, and a second directional coupler device for receiving the high frequency signal and for unequal division of the high frequency signal.

A third aspect of the present invention regards a method operating in a hybrid fiber cable network system for the receiving and distribution of a wideband signal of about 5 MHz to about 3000 MHz through a tap device and at least one line output port an at least two tap output ports. The method comprises receiving at an input port the wideband signal, separating at a first diplexer the wideband signal into a low frequency signal of about 5 MHz to about 860 MHz, an AC power signal, and a high frequency signal of about 1000 MHz to about 3000 MHz, separating at an RF choke the AC power signal from the low frequency signal, dividing at a first splitter the low frequency signal, dividing at a second splitter the high frequency signal, re-combining at a second diplexer the low frequency signal, the high frequency signal and the AC power signal and feeding the re-combined signal to the at least one line output port, and re-combining at a third diplexer the high frequency signal and the low frequency signal,

A fourth aspect of the present invention regards a method operating in a hybrid fiber cable network system for the receiving and distribution of a wideband signal of about 5 MHz to about 3000 MHz through a tap device and at least one line output port an at least two tap output ports. The method comprises receiving at an input port the wideband signal, separating at a first diplexer the wideband signal into a low frequency signal of about 5 MHz to about 860 MHz, an AC power signal, and a high frequency signal of about 1000 MHz to about 3000 MHz, separating at an RF choke the AC power signal from the low frequency signal, dividing at a first directional coupler the low frequency signal, to a second diplexer device and a third diplexer device, the signal is divided in unequal signal levels, dividing at a second directional coupler the high frequency signal to the second diplexer device and the third diplexer device, the signal is divided in unequal signal levels, re-combining at a second diplexer the low frequency signal, the high frequency signal and the AC power signal and feeding the re-combined signal to the at least one line output port, re-combining at a third diplexer the high frequency signal, and the low frequency signal and feeding the re-combined signal, and receiving at the splitter device from the third diplexer device the combined low frequency signal and high frequency signal and dividing the combined signal to the least two tap output ports, the at least two tap output ports receiving the divided combined signal comprising of the low frequency signal and the high frequency signal and feeding the divided signal to a drop cable.

All the above aspects of the present invention provide for the division of a RF signal having a substantially extended bandwidth with a frequency range of about 5 MHz to 3 GHz and above.

All the above aspects of the present invention provide for complete AC current power-passing capabilities.

All the above aspects of the present invention provide for superior power loss, output return loss and output isolation values.

### BRIEF DESCRIPTION OF THE DRAWINGS

The present invention will be understood and appreciated more fully from the following detailed description taken in conjunction with the drawings in which:
Fig. 1 is an electrical schematic block diagram of a conventional hybrid fiber cable network system;
Fig. 2 is an electrical schematic illustration of a tap device with two output ports, in accordance with a preferred embodiment of the present invention;
Fig. 3 is an electrical schematic illustration of an alternative tap device with four output ports, in accordance with a preferred embodiment of the present invention;
Fig. 4 is an electrical schematic illustration of a tap device for unequal distribution of the signal across two output ports, in accordance with a preferred embodiment of the present invention;
Fig. 5 is an electrical schematic illustration of a tap device with two output ports, in accordance with another preferred embodiment of the present invention;
Fig. 6 is an electrical schematic illustration of a tap device with four output ports, in accordance with another preferred embodiment of the present invention; and
Fig. 7 is an electrical schematic illustration of a tap device for unequal distribution of the signal across two output ports, in accordance with another preferred embodiment of the present invention.

### DETAILED DESCRIPTION OF THE PREFERRED EMBODIMENT

The present application is a continuation-in-part of co-pending PCT application serial no. PCT/IL02/00342 entitled A WIDEBAND CATV SIGNAL SPLITTER DEVICE, filed 7 May 2002, and is also related to co-pending PCT Patent application serial no. PCT/IL00/00655 entitled SYSTEM AND METHOD FOR EXPANDING THE OPERATIONAL BANDWIDTH OF A COMMUNICATION SYSTEM, filed 16 November 2000, which are incorporated herein by reference.

A new and novel wideband hybrid fiber cable network such as cable television network (Community Access Television or CATV) tap device is disclosed. The tap device is located on various points along the distribution cable. The tap device is the connection point between the distribution cable and the drop cable, the latter being connected on the far end to subscribers' devices of the CATV system. The AC power signal is preferably bypassed by the tap device to the forward side of the distribution line. As a result of transmitting high RF frequency signal, at least above 1 GHz, over the distribution cable, a new and novel tap device is provided in order to enable the tap device to pass the AC power signal and the low frequency signal, of between about 5 MHz and 860 MHz, while still providing the complete wideband RF signal (about 5 MHz - 3000 MHz) to the drop cable at a proper carrier-to-noise ratio (CNR) and also to allow the forward signal to pass to the downstream distribution line. The present invention overcomes the inabilities of previous tap devices by providing diplexers for band splitting the legacy (or now used) signal frequency of about 5 - 860 MHz and the high frequency band signal of about 1000 - 3000 MHz. Once the signal has been divided the low frequency signal is passed through a splitter while the AC power signal is bypassed using an RF Choke. The high frequency signal is also split and both low and high frequency signals are then combined. After the signals are combined the combined signal of about 5 MHz to 3000 MHz is sent towards the output port of the distribution line and the tap output ports leading to the drop cable and from there to subscribers of the CATV system. The combined signal directed towards the tap output ports leading to the drop cable may be split again once or more to provide signal to more than one drop cables while maintaining acceptable CNR reduction. The tap device of the present invention is operative both in the upstream and in the downstream direction. Signal entering the tap device in the upstream direction travels from the tap output port to the line in port in a return course as described above. The tap device is designed to allow both downstream and upstream transmissions.

The low pass filter of diplexer located adjacent to the line in port of the tap device is used as a high impedance device for the RF choke at frequencies above the legacy frequencies of up to about 860 MHz. Thus, the tap device of the present invention is enabled to transfer the AC power signal from the distribution line and still enable the transfer of RF frequencies above 1000 MHZ both in the forward direction to the drop cable and the distribution cable and in the upstream the head end. The structure of the tap device is necessary to allow the high frequency signal (above 1GHz) to send downstream and upstream RF signal in excess of 860 MHz.

In addition, one non-limiting and exemplary application of the present invention is the use of the DOCSIS protocol as described below. In the upstream direction the tap device of the present invention provides additional spectrum that allows DOCSIS to be used to serve increasing needs of subscribers including those of businesses. In one embodiment of the present invention the combined signal may be divided into a 700 MHz in the downstream and in the upstream directions enabling about 100 channels at 6MHz with QAM 64 (30Mbps per channel) in the downstream which enables data transfer speed in excess of 3000Mbps. In the upstream about 100 channels at 3.2 MHz with QAM 16 (5Mbps per channel) can be returned thus enabling data transfer speeds in excess of 1000Mbps. Persons skilled in the art will appreciate that various other divisions of the combined signal are readily available to the HFC network operator and are contemplated by the present invention. Persons skilled in the art will appreciate that the tap device of the present invention can be used as a replacement for legacy tap devices so as to enable the transfer of RF frequencies above 1000 MHz along the distribution line and to subscribers.

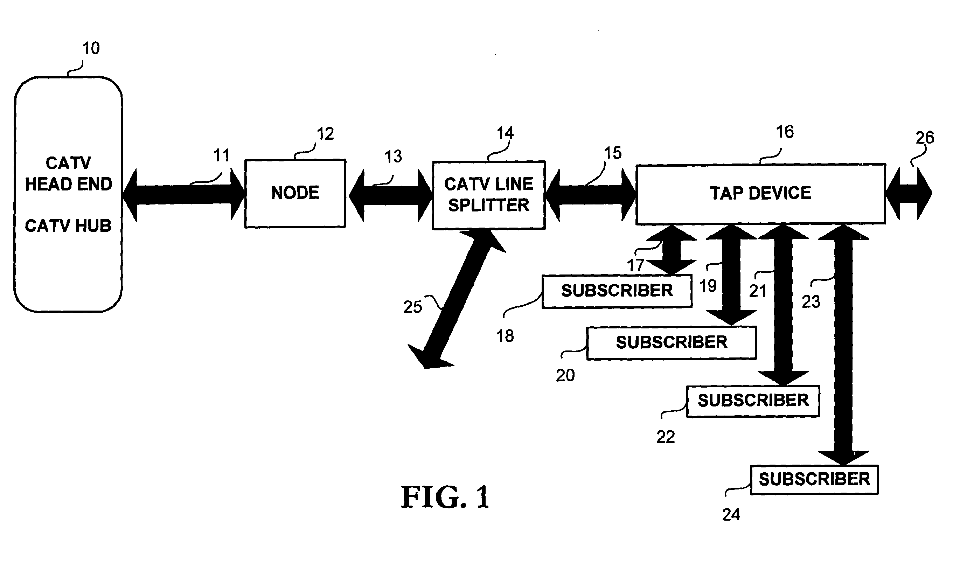

Referring to Fig. 1 illustrating a simplified block diagram of a hybrid fiber cable network system in which the tap device proposed by the present invention could be operative. The simplified and exemplary hybrid fiber cable network system structure as it is illustrated in the drawing includes a CATV head-end unit 10, a node 12, a CATV line splitter device 14, amplifiers (not shown), a tap device 16, a set of subscriber devices 18, 20, 22, 24 and the transmission line segments 11, 13, 14, 15, 17, 19, 21, 23 linking the above-mentioned devices. The transmission media includes typically fiber-optic links, coaxial cables, or a combination thereof. A multiplexed bi-directional signal carrying diverse information content, such as television, radio and data, from diverse information sources and having a substantially extended bandwidth in the range of about 5-3000 MHz is transmitted in the downstream and upstream direction from and to the CATV head-end 10 through the optic fiber transmission distribution line segment 11 to the node unit 12. From the node unit 12 the signal is passed via a coaxial transmission distribution line segment 13 to the CATV line splitter device 14 described in detail in PCT application No. PCT/IL02/00342 entitled A WIDEBAND CATV SIGNAL SPLITTER DEVICE, filed 7 May 2002. The splitter device 14 divides the signal across at least two output ports leading to additional distribution cables. One portion of the signal is transmitted along the transmission distribution line segment 25 to the diverse branches dispersed along the rest of the distribution cable plant while the second portion of the combined signal is passed via the line transmission distribution segment 15 to the drop tap device 16. The tap device 16 re-divides the signal across several output ports (about two - sixteen) where the output ports are connected to the transmission drop line segments 17, 18, 21, 23 which in turn pass the wideband signal to the subscriber units 18, 20, 22, 24 respectively. The drop device 16 also passes the AC power signal and RF signal to a further transmission drop distribution line 26 for further distribution of the signal to additional subscribers.

As the wideband signal transmission is operative in both the upstream and the downstream from the subscriber devices 18, 20, 22, 24 subscriber-specific signals are passed upstream from the through cable transmission drop line segments 17, 19, 21, and 23 respectively back to the tap device 16. The tap device 16 effects the combining of the separate subscriber-specific signals and consequently the combined signal is passed upstream through the transmission distribution line segment 15 to the CATV node 12 and head end 10.

Note should be taken that although in the drawing under discussion only a limited number of hub units, line splitters, drop tap devices, and subscriber devices are shown in a realistic configuration the CATV system would include a plurality of hubs, splitters, amplifiers, tap devices and subscribers.

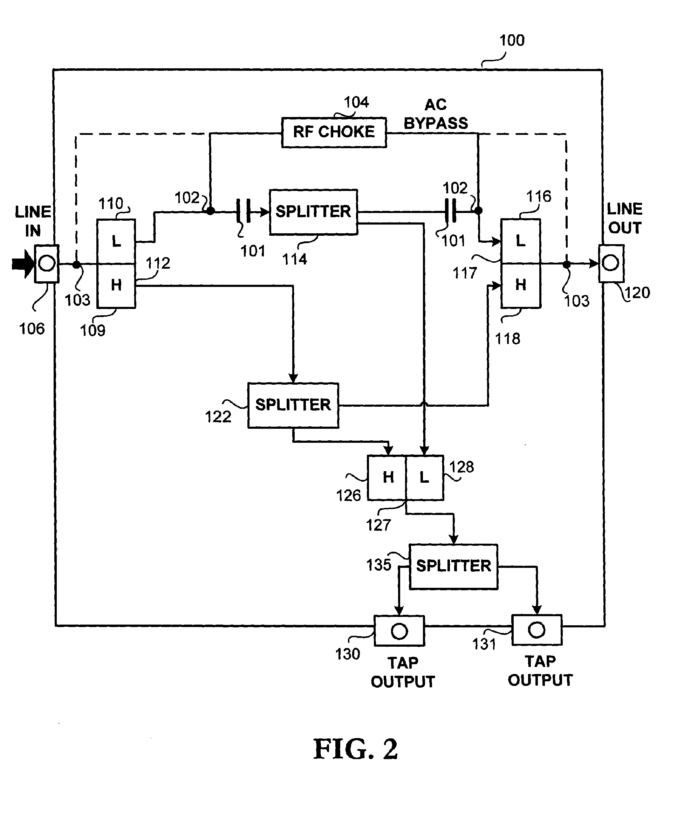

Referring now to Fig. 2 that illustrates the structure of the two-port output signal tap device, according to a preferred embodiment of the invention. The tap device 100 includes an input port 106 and an output port 120, a first tap output port 130, a second tap output port 131, a first diplexer 112, a second diplexer 117, a third diplexer 127, a low frequency splitter 114, a high frequency splitter 122, a wideband two-way splitter and an RF Choke 104. The first diplexer 112 includes a low pass filtering section 110, and a high pass filtering section 109. The second diplexer 117 consists of a low pass filtering section 116, and a high pass filtering section 118. The third diplexer 127 includes a low pass filtering section 128 and a high pass filtering section 126.

A combined signal of about 5 - 3000 MHz carrying information content is transmitted from and to the CATV head-end 10 of Fig. 1 and is received by the input port 106 of the tap device 100. The input signal is fed into the frequency selective circuits of the first diplexer 112. Utilizing the low pass filtering section 110 and the high pass filtering section 109 the first diplexer 112 effects the separation of the signal into a low and a high frequency bandwidth range components. The AC power signal is passed through the low pass filtering section. The high frequency component is fed into the high frequency splitter unit 122 that divides the signal into two signals. An exemplary splitter can be a Low Frequency Splitter such as Splitter TCP2-10-75 by Minicircuits of Brooklyn, New York, USA. The divided signals are fed respectively to the high pass filter 126 of the third diplexer 127 and to the high pass filter section 118 of the second diplexer 117 where they are combined with the low frequency component signal. The low frequency component signal is fed to the low frequency splitter unit 114 that divides the signal into two identical signals and feeds the signal into the low pass filtering session 128 of the third diplexer 127 and to the low pass filtering section 116 of the second diplexer 117. The low pass frequency is the frequency currently used by CATV systems of about 5 -860 MHz. The high pass frequency is about 1000 - 3000Mhz. This high pass frequency may be additionally divided into an upstream band of 700 MHz and a downstream band of 700 MHz to be utilized for example in association with DOCSIS for data transfer over HFC networks. Such division enables the ability to provide subscribers with both a downstream and an upstream transmission speeds far greater than those offered presently. For example, in the upstream direction speeds in excess of 1000Mbps can be reached via the division of the band into 100 or more 3.26MHz channels with QAM 16 providing 10Mbps per channel. The AC power passing through the low pass filter 110 of the first diplexer 112 passes through RF Choke 104 and low pass filter 116 of the second splitter 117. High voltage capacitors 101 protect low frequency splitter 114 from the passage of AC power signal thereby the AC power signal bypasses the splitters 114, and 122. The separated AC power signal is passed to the low pass filter section 116 of the second diplexer 117 and to the low pas filter section 128 of the third diplexer 127. The AC power is not passed through other components and therefore only RF signal is passed through the other components to tap output ports 130, 131. The low pass filter 110 of diplexer 112 located adjacent to the line in port 106 of the tap device 100 is used as a high impedance device for the RF choke at frequencies above the legacy frequencies of up to about 860 MHz. The third diplexer 127 re-combines the low frequency bandwidth range component of the signal, the high frequency bandwidth range component of the signal. The second diplexer 117 is connected to the first output port 120. The low frequency bandwidth range component of the signal, the high frequency bandwidth range component of the signal and the AC component of the signal are re-combined by the second diplexer 117 and passed together to the output port 120. The power of the signal at output port 120 is about 3-4 dB lower relative to the signal power at the input port 106 when low and high frequency splitters 114, 122 are used. The signal appearing at the first output port 120 is fed to the continuance of the distribution cable along the CATV system.

The third diplexer 127 output port is connected to a wideband splitter 135. The wideband splitter includes an RF matching transformer device and a splitter device. An exemplary RF Matching Transformer device is an RF Transformer Device, Component Number B78408A1227A from Epcos AG of Munich, Germany. An exemplary RF Splitter device is an RF Splitter Device, Component Number B78408A1226A from Epcos AG of Munich, Germany. The wideband splitter 135 provides two output ports 130, 131. Each of the two output ports 130, 131 output a signal about 7 dB lower relative to the signal power at the input port 106. The signal level is dependant upon the number of diplexers and splitters the signal has passed through in the tap device 100. The signal thus applied to the second and third output ports 130, 131 is fed to the subscribers serviced by the tap device.

Note should be taken that the AC current is passed by the low pass filter only. The signal output level is relative to the input level of the signal and that the various output ports share in identical signal levels. The output levels described above and below serve as examples and it will be appreciated that various other levels can be implemented in different networks and configurations that are clearly contemplated by the present invention.

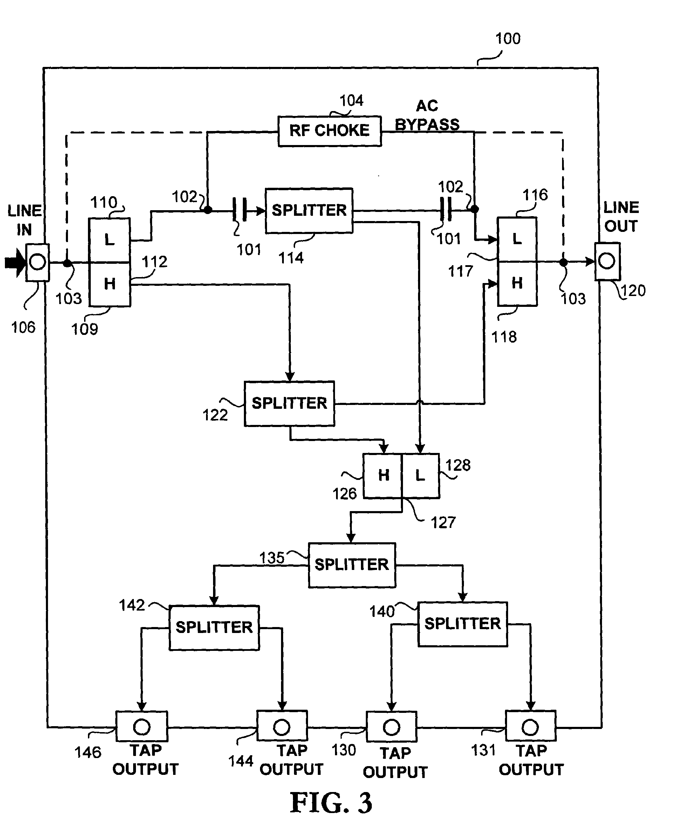

Wideband splitters, such as wideband splitter 135 may be combined to provide additional tap output ports in the drop cable direction. Each leg of a wideband splitter is connected to the output of another two-way wideband splitter as long as more wideband signal splitting is required and is plausible given the cable to noise (CNR) ratio of the output signal after splitting. In the exemplary embodiment shown in association with Figs. 2, 3 each wideband splitting results in additional loss of about 3 dB. It will be evident to those skilled in the art that a plurality of output ports is contemplated by the present invention. Fig. 3 shows a simplified electrical block diagram that illustrates the structure of a four-way tap device, in accordance with a preferred embodiment of the present invention. The four-way tap device differs from tap device 100 in the following manner. Additional two-way wideband splitters 140, 142 and tap outputs 144, 146 are included. Two-way wideband splitter 135 includes output lines to two-way wideband splitters 140, 141. Two-way wideband splitter 140 includes output lines to tap output ports 131, 130. Two-way wideband splitter 141 includes output lines to tap output ports 144, 146. Two-way wideband splitters 140, 141 further reduce CNR by an additional about 3.5 dB, thus the signal output from tap output ports 130, 131, 144, 146 is about 10dB lower than the relative signal level at the input port 106. Additional embodiments include an 8 and 16 tap output ports by adding additional two-way wideband splitters providing a signal output of about 14dB and about 17dB lower than the relative signal level at the input port 106. The lower the signal level is the closer the CATV subscriber must reside to the tap output port to properly receive the transmission signal passed by the tap output port. Additional splitting methods may be used in association with providing more than two output lines from each wideband splitter. For example, four-way wideband splitter may be used instead of the two-way wideband splitter. One two-way wideband splitter and two four-way wideband splitters may also be used instead of seven two-way wideband splitters.

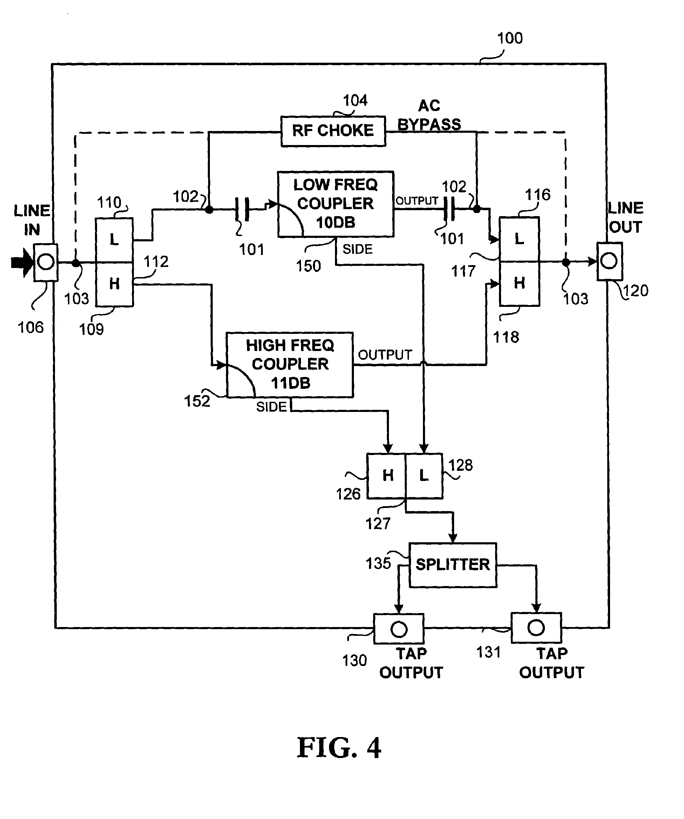

Signal splitting that diverts a pre-defmed portion of the signal to a side port is referred to a directional coupling and the electronic units affecting unequal dividing of the signal are called directional couplers. Fig. 4 shows a simplified block diagram that shows the structure of a tap device utilizing directional couplers for the unequal distribution of the input signal across two output ports. The two-way directional coupler tap device shown in Fig. 4 differs from tap device 100 in the following manner. Instead of low frequency splitter 114 and high frequency splitter 122, low frequency directional coupler 150 and high frequency directional coupler 152 are implemented in the tap device 100. An exemplary low frequency directional coupler can be a 10 dB low frequency directional coupler part no. ADC-10-4-75 manufactured by Minicircuits of Brooklyn, New York, USA. An exemplary high frequency directional coupler can be an 11 dB high frequency directional coupler part no. B78408A1185A3 manufactured by Epcos AG of Munich, Germany. The directional couplers of the present invention are typically arranged in an RF configuration and are not suitable for passing AC power signal. As with the two-way wideband splitter devices the low and high frequency couplers allow both downstream and upstream transmission, operating as combiners in the upstream and as splitters in the downstream signal.

The low frequency (legacy) bandwidth range of about 5 - 860 MHz is fed into the low frequency coupler 150 that divides the signal into two. The two portions are fed respectively to the low pass filter section 116 of the second diplexer 117 and to the low pass filter section 128 of the third diplexer 127. The high frequency bandwidth range of about 1000 - 3000 MHz is fed into the high frequency coupler 152 that divides the signal into two. The two portions are fed respectively to the high pass filter section 118 of the second diplexer 117 and to the high pass filter section 126 of the third diplexer 127.

The low frequency bandwidth range of the signal, the high frequency bandwidth range component of the signal and the AC component are re-combined by the diplexer 116 and are passed together to the output port 120. The power of the signal at output port is about 2-3 dB lower relative to the signal power at the input port 106. The signal arriving at the output port 120 is passed to the continuance of the distribution cable. The third diplexer 127 output port is connected to the first tap output port 131 and the second tap output port 120 of the two-way wideband signal splitter device 135. The third diplexer 127 re-combines the low frequency bandwidth signal and the high frequency bandwidth signal. AC power signal does is not passed by the tap towards the drop cable and is only bypassed towards the forward distribution line via the AC bypass and RF Choke 104 via line output 120. The signal level at the first and second tap output ports 131, 130 is about -13 dB relative the signal level at the input port 106. The difference in signal output level is a result of the low and high frequency directional couplers side and output port signal division. As illustrated in association with Figure 3 additional two-way or four-way wideband signal splitters may be used in association with the tap device in order to split the downstream signal directed towards the drop cable or combine the upstream signal towards the distribution line. Thus, 4, 8 and 16 tap output ports may be used in association with the tap device each having lower relative dB signal level corresponding to the number of wideband splitters used. The configuration of the directional couplers enables the division of part of the RF signal to the customer premises while only marginally affecting the main distribution line signal to be transferred to other subscribers and the rest of the plant along the distribution cable.

In an alternative embodiment the high frequency splitter 122 as well as the directional coupler 152 are implemented also as a distributed element as part of a low loss printed circuit board, or alternatively can be substituted by a wide band drop device eliminating the need for a low loss printed circuit board by using a low cost FR-4 drop device. In such case the tap 100 can be assembled on a PCB which is identical for various taps and tap outputs (the same PCB can be implemented in association with the devices shown in Fig.2 and Fig.3) but different drop-in devices can be used for the implementation, for example, splitter 122 and directional coupler 152 can be implemented as drop-ins that are used in combination with the common PCB referred to above.

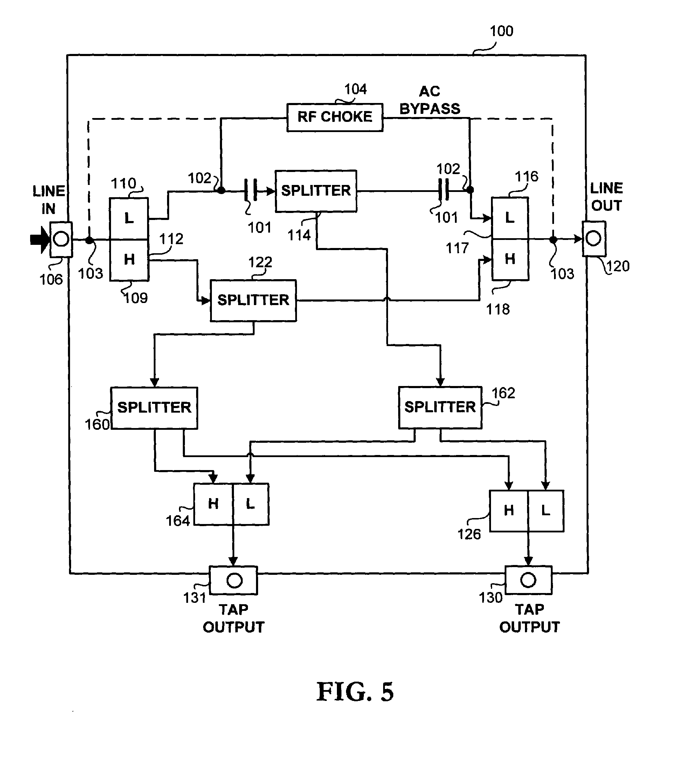

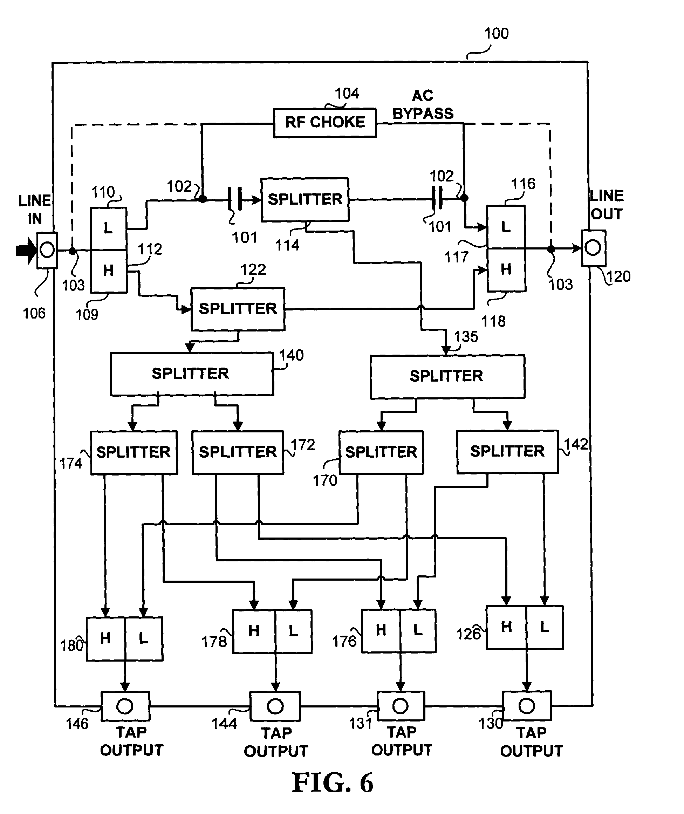

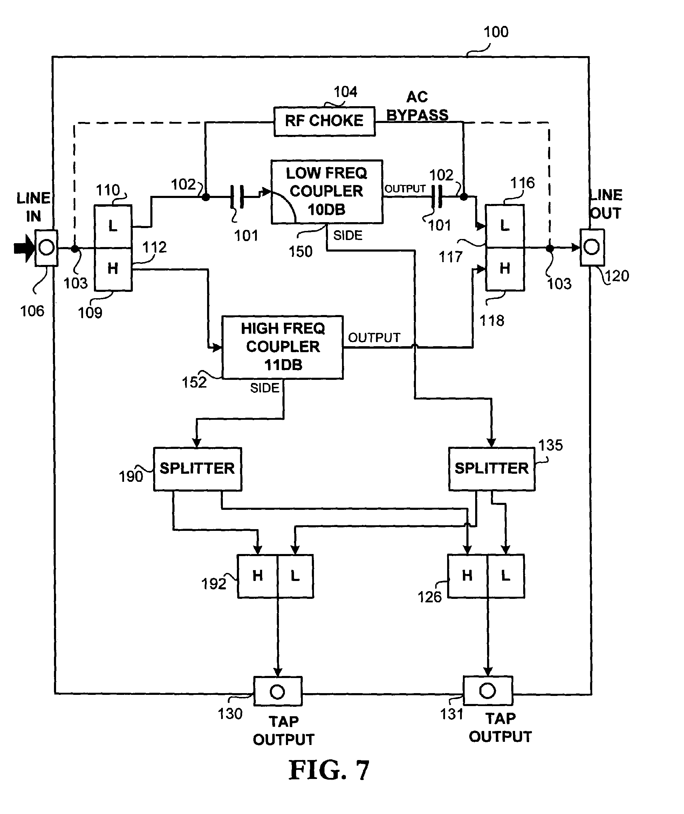

Referring now to Fig. 5 which is an electrical block diagram showing the tap device 100 in accordance with another embodiment of the present invention. The embodiment shown in Figure 5 requires the implementation of additional splitter and diplexer components in order to minimize insertion loss of signal as a result of the use of the tap device along the distribution line and the drop cable. Fig. 5 differs from tap device 100 of the Fig. 2 by adding splitter 160, 162 and diplexer 164. Addition of splitters 160, 162 and then combining the low and high frequency signals by diplexers 126, 164 reduces insertion loss. Likewise, in Fig. 6 showing an electrical block diagram of the tap device 100 in accordance with another embodiment of the present invention additional splitters 170, 172, 174 and diplexers 176, 178, 180. The configuration shown in Fig. 6 provides for the splitting of the separate high frequency signal several times by splitters 140, 172, 174 and the low frequency signal by splitters 135, 142, 170 in the drop cable direction and than the re-combining of the low and high frequency signals in diplexers 126, 176, 178, 180. The recombined signal is fed to tap outlets 130, 131, 144, 146. Like application of additional splitters and diplexers is shown in Fig. 7 showing an electrical block diagram of the tap device for unequal distribution of the signal across two output ports. Additional splitter 190 and diplexer 192 are introduced to the tap device 100 of Fig. 4. Splitters 190, 135 split the side port output of high and low frequency signals received from the high and low frequency couplers respectively. The split high and low frequency signals are then combined in the downstream direction by diplexers 192, 126. The combined signals are fed to the drop cable line via tap output ports 131, 130.

While the respective portions of the device are identified for convenience as input, and output although the tap device is also functional as a signal combiner and as such, the terms input and output indicate relative positioning and are not to be construed to require that signal processing and handling occurs in a particular direction in the device. In the preferred embodiment of the invention, the tap device is utilized in a CATV system or in another signal distribution network and the like. It would be easily perceived by one with ordinary skill in the art that in other preferred embodiments of the invention the tap device could be utilized in diverse other computing and communications environments such as a satellite communications network, a high-speed data transmission network, a telephone network, and the like.

The description of the preferred embodiment of the present invention is not meant to be limiting to other possible embodiments already contemplated of the present invention. For example in the future the substantially expended bandwidth of the signal could reach frequencies in the excess of 3 GHz. Any number of output ports could be associated with the proposed tap device while allowing reasonable signal level drop. The relative output power levels achieved could be diverse and could be suitably adjusted according to the differing requirements. The HFC network of the present invention may be a hybrid fiber cable network or a cable only or a fiber only networks transporting signals including RF signals which may carry television broadcast and data.

It will be appreciated by persons skilled in the art that the present invention is not limited to what has been particularly shown and described hereinabove. Rather the scope of the present invention is defined only by the claims, which follow.

## Claims

1. A hybrid fiber cable network tap device for the receiving and distribution of a wideband signal of about 5 MHz to about 3000 MHz through at least one line output port and at least two tap output ports, the hybrid fiber cable network tap device comprising:
an input port for the reception of the wideband signal;
a first diplexer device for separating the wideband signal into a low frequency signal of about 5 MHz to about 860 MHz, an AC power signal, and a high frequency signal of about 1000 MHz to about 3000 MHz;
an AC power bypass comprising an RF choke for separating the AC power signal from the low frequency signal;
a second diplexer device for re-combining the low frequency signal, and the high frequency signal and the AC power signal and to feed the re-combined signal to the at least one line output port;
a third diplexer device for re-combining the high frequency signal, and the low frequency signal and for feeding the recombined signal;
a first splitter device for receiving the low frequency signal and for dividing the low frequency signal; and
a second splitter device for receiving the high frequency signal and for dividing the high frequency signal.

2. The hybrid fiber cable network tap device of claim 1 further comprises a third splitter device for receiving from the third diplexer device the combined low frequency signal and high frequency signal and for dividing the combined signal to the least two tap output ports, the at least two tap output ports receiving the divided combined signal comprising of the low frequency signal and the high frequency signal and feeding the divided signal to a drop cable.

3. The hybrid fiber cable network tap device of claim 1 wherein the first diplexer device comprises a low pass filter for filtering the low frequency signal and the AC power signal and a high pass filter for filtering the high frequency signal.

4. The hybrid fiber cable network tap device of claim 1 wherein the second diplexer device comprises a low pass filter for combining the low frequency signal and the AC power signal and a high pass filter for combing the high frequency signal and feeding the combined signal to the at least one line output port.

5. The hybrid fiber cable network tap device of claim 1 wherein the third diplexer device comprises a low pass filter for combining the low frequency signal and the AC power signal and a high pass filter for combing the high frequency signal and feeding the combined signal to the at least one line output port.

6. The hybrid fiber cable network tap device of claim 1 wherein the first splitter device is a low frequency splitter for dividing the low frequency signal.

7. The hybrid fiber cable network tap device of claim 1 wherein the second splitter device is a high frequency splitter for dividing the high frequency signal.

8. The hybrid fiber cable network tap device of claim 2 wherein the third splitter device is a two-way wideband splitter for splitting the combined signal and feeding the combined signal to the at least two tap output ports.

9. The hybrid fiber cable network tap device of claim 1 further comprising at least two two-way wideband splitters for dividing the combined signal to at least four tap output ports.

10. The hybrid fiber cable network tap device of claim 1 further comprising at least four two-way wideband splitters for dividing the combined signal to at least eight tap output ports.

11. The hybrid fiber cable network tap device of claim 1 wherein the third splitter is a four-way wideband splitter device for dividing the combined signal to at least four tap output ports.

12. The hybrid fiber cable network tap device of claim 1 further comprising at least two four-way wideband splitter devices for dividing the combined signal to at least eight tap output ports.

13. The hybrid fiber cable network tap device of claim 1 further comprising at least two high voltage capacitors for protecting the first splitter device from the passage of the AC power signal there through.

14. The hybrid fiber cable network tap device of claim 1 wherein an unequal distribution of the input signal is accomplished by replacing the first and second splitter devices with a first and second directional coupler devices.

15. The hybrid fiber cable network tap device of claim 1 wherein the third diplexer combines at least two input signals received from the at least two tap output ports.

16. The hybrid fiber cable network tap device of claim 1 the first, second and third diplexer and the first, second and third splitters divide the wideband signal in the downstream direction and combines the wideband signal in the upstream direction.

17. The hybrid fiber cable network tap device of claim 1 further comprising a third splitter for splitting the high frequency signal and a fourth splitters for splitting the low frequency signals; a fourth diplexers for combing the split low frequency signal and high frequency signal to the least two tap output ports.

18. The hybrid fiber cable network tap device of claim 1 wherein the splitters are implemented as part of a low loss printed circuit board.

19. The hybrid fiber cable network tap device of claim 1 wherein the splitters are implemented as a wide band drop device.

20. The hybrid fiber cable network tap device of claim 1 wherein the high frequency signal is divided into an upstream portion and a downstream portion for delivering content both in an upstream and a downstream direction.

21. The hybrid fiber cable network tap device of claim 14 wherein the couplers are implemented as low loss printed circuit board.

22. The hybrid fiber cable network tap device of claim 14 wherein the couplers are implemented as part of a wide band drop device.

23. The hybrid fiber cable network tap device of claim 20 wherein the upstream and downstream portions of the high frequency signal are used for the transfer of data.

24. The hybrid fiber cable network tap device of claim 20 wherein the upstream and downstream portions of the high frequency signal are used for the transfer of data.

25. The hybrid fiber cable network tap device of claim 20 wherein the upstream and the downstream portions of the high frequency signal are divided into channels for sending data in an upstream direction.

26. A hybrid fiber cable network tap device for the receiving and distribution of a wideband signal of about 5 MHz to about 3000 MHz through at least one line output port an at least two tap output ports, the hybrid fiber cable network tap device comprising:
an input port for the reception of the wideband signal;
a first diplexer device for separating the wideband signal into a low frequency signal of about 5 MHz to about 860 MHz, an AC power signal, and a high frequency signal of about 1000 MHz to about 3000 MHz;
an AC power bypass comprising an RF choke for separating the AC power signal from the low frequency signal;
a second diplexer device for re-combining the low frequency signal, and the high frequency signal and the AC power signal and to feed the re-combined signal to the at least one line output port;
a third diplexer device for re-combining the high frequency signal, and the low frequency signal and for feeding the recombined signal;
a first directional coupler device for unequal division of the low frequency signal;
a second directional coupler device for receiving the high frequency signal and for unequal division of the high frequency signal.

27. The hybrid fiber cable network tap device of claim 26 further comprising a splitter device for receiving the combined low frequency signal and high frequency signal from the third diplexer device and for dividing the combined signal to the least two tap output ports, the at least two tap output ports receiving the divided combined signal comprising of the low frequency signal and the high frequency signal and feeding the divided signal to a drop cable.

28. The hybrid fiber cable network tap device of claim 26 further comprising

29. The hybrid fiber cable network tap device of claim 26 wherein the first diplexer device comprises a low pass filter for filtering the low frequency signal and the AC power signal and a high pass filter for filtering the high frequency signal.

30. The hybrid fiber cable network tap device of claim 26 further comprises a third splitter for splitting the high frequency signal and a fourth splitters for splitting the low frequency signals; a fourth diplexers for combing the split low frequency signal and high frequency signal to the least two tap output ports.

31. The hybrid fiber cable network tap device of claim 26 wherein the second diplexer device comprises a low pass filter for combining the low frequency signal and the AC power signal and a high pass filter for combing the high frequency signal and feeding the combined signal to the at least one line output port.

32. The hybrid fiber cable network tap device of claim 26 wherein the third diplexer device comprises a low pass filter for combining the low frequency signal and the AC power signal and a high pass filter for combing the high frequency signal and feeding the combined signal to the at least one line output port.

33. The hybrid fiber cable network tap device of claim 26 wherein the first directional coupler device is a low frequency directional coupler for the unequal division of the low frequency signal.

34. The hybrid fiber cable network tap device of claim 26 wherein the second directional coupler device is a high frequency directional coupler for the unequal division of the high frequency signal.

35. The hybrid fiber cable network tap device of claim 26 wherein the splitter device is a two-way wideband splitter for splitting the combined signal and feeding the combined signal to the at least two tap output ports.

36. The hybrid fiber cable network tap device of claim 26 further comprising at least two two-way wideband splitters for dividing the combined signal to at least four tap output ports.

37. The hybrid fiber cable network tap device of claim 26 further comprising at least four two-way wideband splitters for dividing the combined signal to at least eight tap output ports.

38. The hybrid fiber cable network tap device of claim 26 wherein the splitter is a four-way wideband splitter device for dividing the combined signal to at least four tap output ports.

39. The hybrid fiber cable network tap device of claim 26 further comprising at least two four-way wideband splitter devices for dividing the combined signal to at least eight tap output ports.

40. The hybrid fiber cable network tap device of claim 26 further comprising at least two high voltage capacitors for protecting the first directional coupler device from the passage of the AC power signal there through.

41. The hybrid fiber cable network tap device of claim 1 wherein the third diplexer combines at least two input signals received from the at least two tap output ports.

42. The hybrid fiber cable network tap device of claim 1 the first, second and third diplexer and the first, second directional coupler devices and the splitter device divide the wideband signal in the downstream direction and combines the wideband signal in the upstream direction.

43. Within a hybrid fiber cable network system a method for the receiving and distribution of a wideband signal of about 5 MHz to about 3000 MHz through a tap device and at least one line output port an at least two tap output ports, the method comprising:
receiving at an input port the wideband signal;
separating at a first diplexer the wideband signal into a low frequency signal of about 5 MHz to about 860 MHz, an AC power signal, and a high frequency signal of about 1000 MHz to about 3000 MHz;
separating at an RF choke the AC power signal from the low frequency signal;
dividing at a first splitter the low frequency signal;
dividing at a second splitter the high frequency signal;
re-combining at a second diplexer the low frequency signal, the high frequency signal and the AC power signal and feeding the recombined signal to the at least one line output port;
re-combining at a third diplexer the high frequency signal and the low frequency signal;

44. The method as claimed in claim 43 further comprising the steps of feeding the recombined signal to a third splitter device and dividing the combined signal to the least two tap output ports, the at least two tap output ports receiving the divided combined signal comprising of the low frequency signal and the high frequency signal and feeding the divided signal to a drop cable.

45. The method as claimed in claim 43 further comprising the step of dividing at a third splitter the low frequency signal and at a fourth splitter the high frequency signal.

46. The method as claimed in claim 43 further comprising the step of recombining at a fourth diplexer the high frequency signal and the low frequency signal to the least two tap output ports, the at least two tap output ports receiving the divided combined signal comprising of the low frequency signal and the high frequency signal and feeding the divided signal to a drop cable.

47. The method as claimed in claim 43 wherein the first and second splitters are directional couplers

48. Within a hybrid fiber cable network system a method for the receiving and distribution of a wideband signal of about 5 MHz to about 3000 MHz through a tap device and at least one line output port an at least two tap output ports, the method comprising:
receiving at an input port the wideband signal;
separating at a first diplexer the wideband signal into a low frequency signal of about 5 MHz to about 860 MHz, an AC power signal, and a high frequency signal of about 1000 MHz to about 3000 MHz;
separating at an RF choke the AC power signal from the low frequency signal;
dividing at a first directional coupler the low frequency signal, to a second diplexer device and a third diplexer device, the signal is divided in unequal signal levels;
dividing at a second directional coupler the high frequency signal to the second diplexer device and the third diplexer device, the signal is divided in unequal signal levels;
re-combining at a second diplexer the low frequency signal, the high frequency signal and the AC power signal and feeding the recombined signal to the at least one line output port;
re-combining at a third diplexer the high frequency signal, and the low frequency signal and feeding the re-combined signal;
receiving at the splitter device from the third diplexer device the combined low frequency signal and high frequency signal and dividing the combined signal to the least two tap output ports, the at least two tap output ports receiving the divided combined signal comprising of the low frequency signal and the high frequency signal and feeding the divided signal to a drop cable.
